# EUROPÄISCHE PATENTSCHRIFT

(11) **EP 3 503 685 B1**
(45) Veröffentlichungstag und Bekanntmachung des Hinweises auf die Patenterteilung: **27.09.2023**
(21) Anmeldenummer: 17209792.5
(22) Anmeldetag: 21.12.2017
(51) Int. Cl.: H05B 45/10, H05B 45/14, H05B 47/14

(54) **LEUCHTMITTEL MIT DIAGNOSE**
ILLUMINANT WITH DIAGNOSIS
MOYEN D'ÉCLAIRAGE PERMETTANT LE DIAGNOSTIC

(43) Veröffentlichungstag der Anmeldung: 26.06.2019
(73) Patentinhaber: B&R Industrial Automation GmbH, 5142 Eggelsberg (AT)
(72) Erfinder: Huber, Matthias, 84568 Pleiskirchen (DE); Waldl, Andreas, 5142 Eggelsberg (AT); Kaufleitner, Franz, 5122 Hochburg-Ach (AT)
(74) Vertreter: Patentanwälte Pinter & Weiss OG

(56) Entgegenhaltungen:
- EP-A1- 2 663 162
- WO-A1-2009/146201
- WO-A2-2015/097476

## Beschreibung

Die gegenständliche Erfindung betrifft ein Verfahren zur Beleuchtung in einer Machine Vision Anwendung, wobei eine Lichtquelle, vorzugsweise eine Leuchtdiode, eines Leuchtmittels Licht emittiert und wobei eine Intensität des emittierten Lichts über einen von einer Steuereinheit abgegebenen elektrischen Strom und/oder elektrischer Spannung geregelt wird, wobei unabhängig von der Steuereinheit zumindest eine mit der Intensität korrelierende Leistungsgröße der Lichtquelle erfasst und mit zumindest einem Grenzwert verglichen wird, und wobei, sobald die zumindest eine Leistungsgröße den zumindest einen Grenzwert erreicht oder überschreitet, eine Aktion ausgelöst wird, mit welcher unabhängig von der Steuereinheit die Intensität reduziert wird. Weiters betrifft die gegenständliche Erfindung ein Leuchtmittel zur Beleuchtung in einer Machine Vision Anwendung mit zumindest einer Lichtquelle, vorzugsweise zumindest einer Leuchtdiode, die Licht emittiert, und einer Steuereinheit, welche die Lichtquelle mit einem elektrischen Strom und/oder einer elektrischen Spannung versorgt und ausgestaltet ist die Intensität des emittierten Lichts über den elektrischen Strom und/oder die elektrische Spannung zu regeln, wobei eine Detektionseinheit vorgesehen ist, welche zumindest eine mit der Intensität korrelierende Leistungsgröße der Lichtquelle erfasst, wobei eine Diagnoseeinheit vorgesehen ist, welche die zumindest eine Leistungsgröße mit zumindest einem vorgegebenen Grenzwert vergleicht und eine Aktion auslöst, die unabhängig von der Steuereinheit die Intensität reduziert, sobald die zumindest eine Leistungsgröße den zumindest einen Grenzwert erreicht, oder überschreitet und ein Machine Vision System mit einer Arbeitsstation, dessen Leuchtbereich von einer Kamera erfasst und von zumindest einem erfindungsgemäßen Leuchtmittel ausgeleuchtet wird

Moderne Leuchtmittel, speziell für den Einsatz in der industriellen Bildverarbeitung (Machine Vision Systeme), werden zum überwiegenden Teil aus Halbleiter, wie z.B. mit LED's, Diodenlaser oder auch in OLED Technologie, gefertigt. Bei Machine Vision handelt es sich bekanntermaßen um Verfahren zum Steuern bzw. Regeln technischer Prozesse, beispielsweise Maschinen oder Anlagen, wobei die zum Steuern bzw. Regeln benötigte Information zumindest teilweise anhand der automatisierten Bildverarbeitung einer mit einer Kamera aufgenommenen Aufnahme von einem Objekt (beispielsweise ein Werkstück) gewonnen wird. Ein Machine Vision System umfasst daher eine Kamera, ein Leuchtmittel mit einer Lichtquelle zum Ausleuchten zumindest des aufgenommenen Bereichs und eine Auswerteeinheit zum Auswerten der Aufnahme, wobei unter Aufnahme sowohl ein oder mehrere einzelne Bild(er), als auch eine Sequenz von Bildern, also ein Film, zu verstehen ist. Oftmals ist die Kamera und die Auswerteeinheit in einem Gerät zu einer sogenannten Smart Kamera verbaut. Zur Einstellung der Intensität des abgestrahlten Lichtes, bzw. der Leuchtdichte des Leuchtmittels, werden unterschiedliche Techniken verwendet, wie eine Regelung einer Konstant-Stromquelle, ein PWM Betrieb, etc.

Die WO 2009/146201 A1 offenbart eine Machine Vision Anwendung, wobei eine Art von Schutzmechanismus vorgesehen ist. So wird eine von den LED abgegebene Leistung gemessen und bei einer Überschreitung eines Grenzwerts limitiert, indem das Signal nochmals gepulst wird. Die WO 2015/097476 A2 zeigt ein Beleuchtungssystem, welches eine Lichtquelle basierend auf dem bisherigen Verlauf regelt.

Die EP 2 633 162 A1 offenbart ein System zur Blitzerzeugung mittels light emitting diode (LED), beispielsweise in einem Flugzeug. Es ist eine Steuereinheit offenbart, welche die LED mit Strom versorgt und ein optischer Sensor detektiert die Intensität des Lichts. Die Blitzdauer wird als Grenzwert benutzt und wenn es einen Referenzwert überschreitet wird ein zusätzlicher Blitz erzeugt. Damit kann bei einem Leuchtmittel als Warnsignal der Verschleiß der Lichtquelle überwacht werden.

Beim Design eines Leuchtmittels, insbesondere für Machine Vision Anwendungen, ist auf die photobiologische Sicherheit zu achten. Die photobiologische Sicherheit bezieht sich je nach Gefahr/Spektralbereich auf alle in einem Leuchtmittel befindlichen Lichtquellen oder auf einzelne Lichtquellen. Die Norm EN 62471:2009-03 beschreibt die jeweiligen Grenzen für die unterschiedlichen Risikogruppen (RG0, RG1, RG2, RG3) der photobiologischen Sicherheit. Die einem Leuchtmittel zugewiesene Risikogruppe kann von der Betriebsart des Leuchtmittels abhängen, z.B. die eingestellte Intensität, ob das Leuchtmittel im Dauerbetrieb oder Blitzlichtbetrieb betrieben wird, usw. Abhängig von der Risikogruppe sind geeignete Maßnahmen zum Schutz vor Augenschäden für die in der Umgebung des Leuchtmittels befindlichen Personen, durchzuführen. Dieser Schutz muss durch einen geeigneten Abstand, durch Augenschutzmaßnahmen oder der Abschirmung der Lichtquelle erfolgen. Für die Risikogruppe 0 sind beispielsweise keine zusätzlichen Maßnahmen zu treffen, z.B. aufgrund eines sehr geringen Werts der Intensität des abgegebenen Lichts. Durch einen Fehler bei der Bedienung oder dem Defekt eines Bauteils des Leuchtmittels kann eine Lichtquelle, die in einer Risikogruppe eingeordnet ist, fehlerhafterweise eine höhere Lichtintensität, beispielsweise in einem bestimmten Spektrum, abstrahlen, als angesichts der Risikogruppe an sich zulässig wäre. Damit ist die photobiologische Sicherheit der Personen im Umfeld des Leuchtmittels in einem solchen Fall natürlich nicht mehr ausreichend sichergestellt. Das ist wünschenswerterweise natürlich zu vermeiden.

Es ist daher eine Aufgabe der gegenständlichen Erfindung, ein Leuchtmittel anzugeben, das einen sicheren Schutz vor einer unerwünscht erhöhten abgegebenen Lichtintensität bietet. Diese Aufgabe wird erfindungsgemäß durch ein Verfahren gemäß Anspruch 1 gelöst, bei dem als zumindest eine Leistungsgröße die Intensität selbst und/oder der elektrische Strom und/oder die elektrische Spannung verwendet wird. Sobald die zumindest eine Leistungsgröße den zumindest einen Grenzwert erreicht, bzw. überschreitet, wird eine Aktion ausgelöst, mit welcher unabhängig von der Steuereinheit die Intensität reduziert wird. Die Aufgabe wird zudem durch ein Leuchtmittel gemäß Anspruch 6 gelöst, bei welchem eine Detektionseinheit vorgesehen ist, welche zumindest eine Leistungsgröße der Lichtquelle erfasst, und eine Diagnoseeinheit vorgesehen ist, welche die zumindest eine Leistungsgröße mit zumindest einem vorgegebenen Grenzwert vergleicht und eine Aktion auslöst, sobald die zumindest eine Leistungsgröße den zumindest einen Grenzwert erreicht, bzw. überschreitet. Die Detektionseinheit kann integraler Bestandteil der Diagnoseeinheit sein. Der vorgegebene Grenzwert kann der Diagnoseeinheit von einer Parametereinheit zur Verfügung gestellt werden.

Das erfindungsgemäße Leuchtmittel erfüllt bereits zumindest die Sicherheitsanforderungsstufe (safety integrity level SIL) 1 nach der Norm IEC 61508:2010. Diese Norm beschreibt konstruktive und qualitätssichernde Maßnahmen zur Entwicklung elektronischer und programmierbarer elektronischer Systeme, womit ein Einsatz dieser Systeme in funktional sicheren Anwendungen möglich ist. Durch geeignete Wahl der Komponenten, bzw. Ergänzungen, beispielsweise in Form notwendiger Redundanzen, kann das Leuchtmittel natürlich auch einer höheren Sicherheitsanforderungsstufe genügen.

Die Regelung der Intensität des vom Leuchtmittel emittierten Lichts wird über einen von einer Steuereinheit an das Leuchtmittel abgegebenen elektrischen Strom bzw. elektrischen Spannung geregelt. Durch die Ermittlung einer Leistungsgröße des Leuchtmittels kann auf ein Fehlverhalten einzelner Lichtquellen rückgeschlossen werden. Wird durch die Diagnoseeinheit erkannt, dass eine Leistungsgröße einen Grenzwert erreicht bzw. überschreitet, so kann die Intensität durch eine ausgelöste Aktion reduziert werden. Ein Erreichen des Grenzwertes kann beispielsweise aufgrund einer Fehlfunktion oder Fehlbedienung der Steuereinheit erfolgen. Erfindungsgemäß kann somit auch bei einer Fehlfunktion oder Fehlbedienung der Steuereinheit unabhängig von der Steuereinheit die Intensität reduziert werden, wobei es wesentlich ist, dass nicht lediglich in die Regelungsmechanismen der Steuereinheit selbst eingegriffen wird. Daher wird über einen unabhängigen Abschaltpfad, der beispielsweise vor oder nach der Steuereinheit wirkt, die Intensität reduziert.

Es kann als Aktion von der Diagnoseeinheit der Strom bzw. die elektrische Spannung zum Leuchtmittel reduziert und/oder unterbrochen werden.

Wird der elektrische Strom bzw. die elektrische Spannung unterbrochen bzw. reduziert, so wird die Intensität des emittierten Lichts reduziert (bei einer Unterbrechung auf Null reduziert), ohne auf die Regelungsmechanismen der Steuereinheit selbst zuzugreifen. Stattdessen wirkt die Aktion nach der Steuereinheit auf den der Lichtquelle zur Verfügung gestellten elektrischen Strom bzw. elektrische Spannung, wobei Schalter, oder andere Regelungs- bzw. Dimm-Mechanismen, bestehend aus z.B. MOSFET, Transistoren, Relais, etc. zur Reduktion bzw. Unterbrechung des elektrischen Strom bzw. der elektrischen Spannung dienen können.

Es kann als Aktion von der Diagnoseeinheit ein Versorgungsstrom der Steuereinheit und/oder der Lichtquelle unterbrochen werden. Wird der Versorgungsstrom (der Steuereinheit und/oder des Leuchtmittels), beispielsweise mittels eines Schalter, unterbrochen, so wird das Leuchtmittel deaktiviert, womit kein Licht emittiert wird. Die Intensität des emittierten Lichts wird somit auf Null reduziert - ohne auf die Regelungsmechanismen der Steuereinheit selbst zuzugreifen. Stattdessen wirkt die Aktion bereits vor der Steuereinheit auf deren Versorgungsstrom, bzw. unabhängig von der Steuereinheit auf den direkten Versorgungsstrom des Leuchtmittels.

Grundlegend können als Leistungsgröße nicht nur Momentanwerte, sondern beispielsweise auch abgeleitete Relativwerte oder zeitliche Verläufe erfasst und mit Grenzwerten, welche beispielsweise ebenso zeitliche Verläufe repräsentieren, verglichen werden.

Ganz besonders vorteilhaft ist es, wenn das Leuchtmittel im bestimmungsgemäßen Betrieb die Anforderungen einer Risikogruppe nach EN 62471:2009-03 erfüllt und der Grenzwert eine Anforderung einer Risikogruppe, vorzugsweise der im ordnungsgemäßen Betrieb vorgesehenen Risikogruppe, dient. So kann eine Überschreitung von Grenzwerten, die zu einer Erhöhung der Risikogruppe führen würde, unabhängig von der Steuereinheit verhindert werden. Es könnte natürlich auch eine Überschreitung der im bestimmungsgemäßen Betrieb vorgesehenen Risikogruppe erlaubt werden, beispielsweise um eine weitere Risikogruppe. So kann die gewünschte maximale Risikogruppe je nach Anwendung, Einsatzort (d.h. frei oder nur für geschultes Personal zugänglich oder gänzlich abgeschirmt, etc.) und Eigenschaften des Leuchtmittels (Spektralbereich, maximale Leistungsabgabe, Abstrahlcharakteristik, etc.) begrenzt werden.

Machine Vision Systeme mit einer Arbeitsstation, dessen Leuchtbereich von einer Kamera erfasst wird, können von zumindest einem erfindungsgemäßen Leuchtmittel ausgeleuchtet werden. Auch Anwendungen in industriellen Beleuchtungen mit integrierter Intelligenz (Smart Light) sind möglich.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine typische Machine Vision Anordnung,
Fig.2 eine erste Ausgestaltung des Leuchtmittels,
Fig.3 eine zweite Ausgestaltung des Leuchtmittels,
Fig. 4 eine dritte Ausgestaltung des Leuchtmittels.

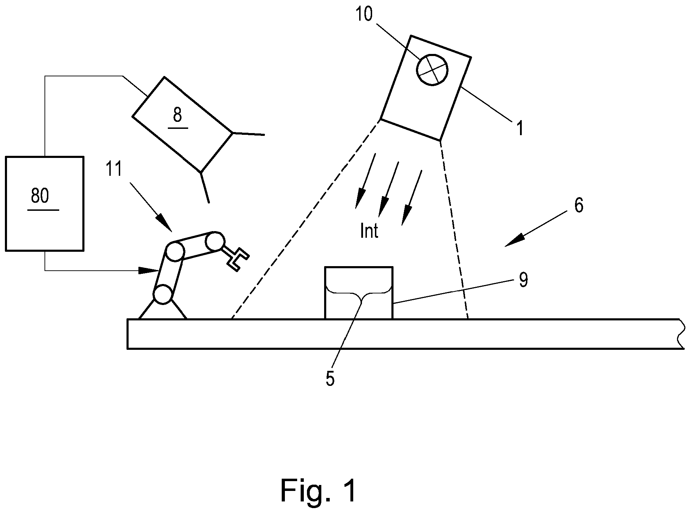

In Fig. 1 ist eine typische Anordnung einer Machine Vision Anwendung dargestellt. Ein Leuchtmittel 1 mit einer Lichtquelle 10, beispielsweise einer LED oder einer Anordnung von LEDs, beleuchtet einen Leuchtbereich 5 in einer Arbeitsstation 6, z.B. eine Ver- oder Bearbeitungsmaschine. Im Leuchtbereich 5 des Leuchtmittels 1 befindet sich ein Bauteil 9, das vom Leuchtmittel 1 mit Licht L mit der Intensität Int ausgeleuchtet wird und das von einer Kamera 8, die den Leuchtbereich 5 (oder einen Teil davon) erfasst, aufgenommen wird. Die von der Kamera 8 aufgenommene Aufnahme wird von einer Auswerteeinheit 80 ausgewertet und die daraus gewonnene Information wird verwendet, um die Arbeitsstation 6 und/oder eine Bearbeitungseinheit 11 in der Arbeitsstation 6 zu steuern oder zu regeln. Die Auswerteeinheit 80 kann dabei auch Teil der Kamera 8 sein. Selbstverständlich kann das Leuchtmittel 1 auch integraler Bestandteil der Kamera 8 und/oder Auswerteeinheit 10 sein. Nachdem der Aufbau einer Machine Vision Anwendung hinlänglich bekannt ist, wird hier nicht näher auf Details solcher Machine Vision Anwendungen und Systeme eingegangen.

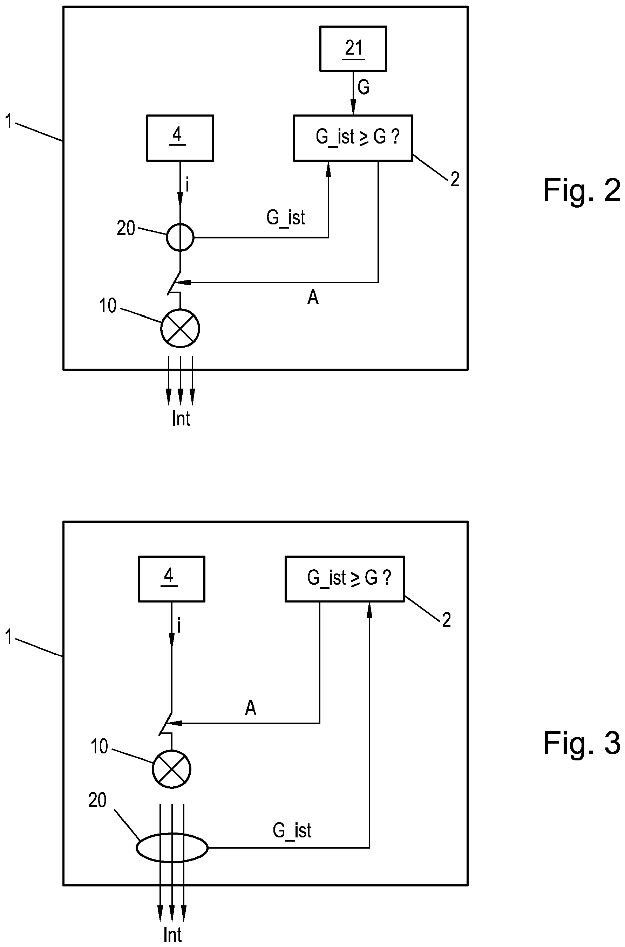

Fig. 2 zeigt eine erste Ausgestaltung des Leuchtmittels 1, wobei eine Lichtquelle 10 vorgesehen ist. Natürlich können auch mehrere Lichtquellen 10 in einem Leuchtmittel 1 vorhanden sein. Erfindungsgemäß sind eine Diagnoseeinheit 2, beispielsweise ein Mikroprozessor, eine speicherprogrammierbare Steuerung, eine integrierte Schaltung (FPGA, ASIC), oder ähnliches, und eine Detektionseinheit 20 vorgesehen. Die Detektionseinheit 20 erfasst eine aktuelle Leistungsgröße G_ist der Lichtquelle 10 bzw. des Leuchtmittels 1. Die Leistungsgröße G_ist kann mit der Intensität Int korrelieren und beispielsweise die Intensität selbst darstellen, womit die Detektionseinheit 20 einen Intensitätssensor darstellen kann. In der Ausgestaltung nach Fig. 2 stellt die Detektionseinheit 20 einen Stromsensor dar, der einen von der Steuereinheit 4 an die Lichtquelle 10 gelieferten elektrischen Strom i, welcher bekanntermaßen ebenso mit der Intensität Int korreliert, erfasst. Natürlich könnte auch eine der Lichtquelle 10 von der Steuereinheit 4 zur Verfügung gestellte elektrische Spannung erfasst werden. Sowohl Detektionseinheit 20, als auch Diagnoseeinheit 2 sind in Fig. 2 als integraler Bestandteil des Leuchtmittels 1 vorgesehen, können aber natürlich auch als separate Bauteile außerhalb des Leuchtmittels 1 vorgesehen sein.

Die Diagnoseeinheit 2 vergleicht also die Leistungsgröße G_ist mit einem Grenzwert G. Der Grenzwert G kann dem Leuchtmittel 10 wie in Fig. 2 dargestellt von einer Parametereinheit 21 übermittelt werden (beispielsweise über einen Datenbus) oder auch der Diagnoseeinheit 2 vorab bekannt sein und z.B. in einem Speicher abgelegt sein. Die aktuelle Leistungsgröße G_ist, hier der an das Leuchtmittel 10 gelieferte Strom i, wird der Diagnoseeinheit 2 von der Detektionseinheit 20 zur Verfügung gestellt.

Wird beispielsweise durch eine falsche Einstellung oder einen Fehler an der Steuereinheit 4 des Leuchtmittels 10 ein zu hoher Strom i vorgegeben, so könnte dies ohne das erfindungsgemäße Verfahren zur Überschreitung der Grenzwerte einer gewünschten Risikogruppe RG führen, womit das Leuchtmittel in eine höhere Risikogruppe RG fällt, was eine Gefährdung für Mensch und Tier darstellt, beispielsweise durch eine zu hohe abgegebene Intensität Int.

In der Diagnoseeinheit 2 wird die von der Detektionseinheit 20 bereitgestellte Leistungsgröße G_ist mit dem Grenzwert G verglichen. Der Grenzwert G kann, wie in Fig. 2 angedeutet, der Diagnoseeinheit 2 von einer Parametereinheit 21 zur Verfügung gestellt werden. Erreicht oder überschreitet die Leistungsgröße G_ist den Grenzwert G, vorzugsweise um mehr als eine vorgegebene Toleranz (die beispielsweise ebenfalls in der Parametereinheit 21 abgelegt sein kann), ab, so wird zumindest eine Aktion A ausgelöst. Es kann hierfür als Aktion A die Lichtquelle 10, bzw. das Leuchtmittel 1 deaktiviert werden, beispielsweise indem der an die Lichtquelle 10 abgegebene elektrische Strom i, bzw. eine an die Lichtquelle 10 anliegende elektrische Spannung reduziert wird. Damit wird z.B. die Intensität Int des abgegebenen Lichts reduziert. Als Aktion könnte nicht nur die gesamte abgegebene Intensität reduziert werden, sondern auch nur ein Spektralteil, sofern dies über einen Eingriff in den an die Lichtquelle 10 abgegeben elektrischen Strom i, bzw. anliegende elektrische Spannung möglich ist. Es ist dabei wesentlich, dass durch die Aktion kein Eingriff in die Steuereinheit 2, bzw. deren Regelungsmechanismen erfolgt.

Es kann auch der an die Lichtquelle 10 abgegebene elektrische Strom i, bzw. eine an die Lichtquelle 10 anliegende elektrische Spannung vollständig unterbrochen werden. Damit wird die Intensität Int des abgegebenen Lichts auf Null reduziert, also abgeschaltet. Somit kann das Leuchtmittel 1 erfindungsgemäß von der Diagnoseeinheit 2 ohne einen Eingriff in die Steuereinheit 4 in einen sicheren Zustand gebracht werden, wobei zusätzlich auch ein optisches, akustisches, oder ähnliches Warnsignal ausgegeben werden kann, auf welches vom Bedienpersonal der Maschine oder Anlage reagiert werden kann.

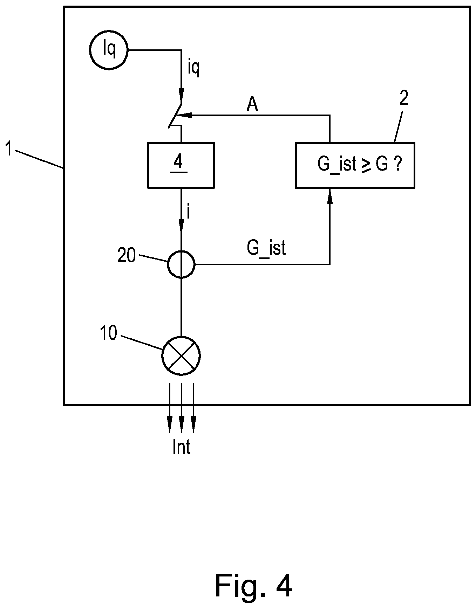

Es kann natürlich auch eine andere, vorteilhafterweise mit der Intensität Int korrelierende, Leistungsgröße G_ist von der Detektionseinheit 2 gemessen und an die Diagnoseeinheit 2 übermittelt werden. In einer zweiten vorteilhaften Ausgestaltung nach Fig. 3 wird z.B. von der Detektionseinheit 20, beispielsweise einem Intensitätssensor, die Intensität Int als Leistungsgröße G_ist ermittelt und an die Diagnoseeinheit 2 übermittelt. Die Diagnoseeinheit 2 vergleicht erfindungsgemäß die Leistungsgröße G_ist mit dem Grenzwert G und löst eine Aktion A aus, mit welcher unabhängig von der Steuereinheit 4 die Intensität Int reduziert wird, sobald die zumindest eine Leistungsgröße G_ist den zumindest einen Grenzwert G erreicht bzw. überschreitet. Im in Fig. 3 dargestellten Fall wird als Aktion A von der Diagnoseeinheit 2 der Strom i reduziert, bzw. unterbrochen. Es wäre natürlich auch eine andere Aktion zur von der Steuereinheit 4 unabhängigen Reduzierung der Intensität Int vorstellbar, beispielsweise die Unterbrechung eines Versorgungsstroms iq, wie es weiter unten anhand des Ausführungsbeispiels nach Fig. 4 beschrieben wird. Es kann als Leistungsgröße G_ist beispielsweise die gesamte Intensität Int des abgegebenen Lichts oder auch die Intensität Int eines bestimmten Spektralbereichs betrachtet werden. Bekanntermaßen bringt beispielsweise blaues Licht mit einer gewissen Intensität Int eine höhere Gefährdung mit sich als rotes Licht mit derselben Intensität Int.

Es können natürlich von der Detektionseinheit 20 auch andere Größen gemessen und in die zu übertragende Leistungsgröße, G_ist gewandelt werden, woraufhin die Leistungsgröße G_ist an die Diagnoseeinheit 2 übermittelt wird, oder die andere Leistungsgröße von der Detektionseinheit 20 an die Diagnoseeinheit 2 übermittelt und erst in dieser in die Leistungsgröße G_ist gewandelt werden, bevor diese mit dem Grenzwert G verglichen wird.

In einer zweiten vorteilhaften Ausgestaltung nach Fig. 4 wird als Aktion nicht der von der Steuereinheit 4 an das Leuchtmittel 10 abgegebene elektrische Strom i (bzw. die abgegebene elektrische Spannung) unterbrochen bzw. reduziert, sondern ein an die Steuereinheit 4 von einer Stromversorgung Iq abgegebener Versorgungsstrom iq unterbrochen, womit die Intensität Int des vom Leuchtmittel 1 abgegebenen Lichts (auf Null) reduziert werden kann. In der Ausgestaltung nach Fig. 4 wird der elektrische Strom i von der Detektionseinheit 20 als zumindest eine Leistungsgröße G_ist detektiert und an die Diagnoseeinheit 2 übermittelt. Natürlich könnte die Detektionseinheit 20 auch in dieser Ausgestaltung eine andere Leistungsgröße G_ist ermitteln, beispielsweise die Intensität Int, etc. Die Diagnoseeinheit 2 vergleicht die zumindest eine Leistungsgröße G_ist mit zumindest einem vorgegebenen Grenzwert G (welcher beispielsweise von einer Parametereinheit 21 zur Verfügung gestellt werden kann) und löst als Aktion eine Unterbrechung des Versorgungsstroms Iq aus, sobald die zumindest eine Leistungsgröße G_ist den zumindest einen Grenzwert G erreicht, bzw. überschreitet. Somit wird unabhängig von der Steuereinheit 4 die Intensität Int (auf Null) reduziert. Die Unterbrechung des Versorgungsstroms Iq kann besonders vorteilhaft sein, wenn die Steuereinheit 4 in die Lichtquelle 10 integriert ist und ein Eingriff in den abgegebenen elektrische Strom i, bzw. die abgegebene elektrische Spannung nicht einfach möglich ist.

Wenn die Lichtquelle 10 selbst über eine von der Steuereinheit 4 unabhängige Stromversorgung Iq, welcher die Lichtquelle 10 mit einem Versorgungsstrom iq versorgt, verfügt, so kann als Aktion auch dieser Versorgungsstrom iq unterbrochen werden.

Als Aktion A kann also über Abschaltung des elektrischen Stroms i bzw. der elektrischen Spannung und/oder Abschaltung eines Versorgungsstroms iq eine Abschaltung der Lichtquelle 10 erfolgen, ohne in die Regelung der Steuereinheit 4 einzugreifen. Es kann, wie erwähnt, als Aktion A auch eine Begrenzung der Intensität erfolgen, indem der elektrische Stroms i bzw. die elektrische Spannung u reduziert wird.

Vorzugsweise erfüllt ein erfindungsgemäßes Leuchtmittel 1 im bestimmungsgemäßen Betrieb die Anforderungen einer Risikogruppe RG nach EN 62471:2009-03. Als Grenzwert G kann eine Anforderung einer Risikogruppe RG vorzugsweise der im bestimmungsgemäßen Betrieb vorgesehenen Risikogruppe RG dienen. Als Aktion A kann somit die Intensität Int insgesamt oder ggf. für einen bestimmten Spektralbereich derart begrenzt werden, dass die Leistungsgröße G_ist den Grenzwert G nicht überschreitet, womit die Risikogruppe RG des Leuchtmittels 1 nicht erhöht wird. Das erfindungsgemäße Verfahren kann als Leistungsgrößen beispielsweise auch eine zu lange Belichtungsdauer in Abhängigkeit vom Spektralbereich, usw. betrachten und mit einer Aktion A reagieren, wenn entsprechende Grenzwerte G erreicht oder überschritten werden.

## Patentansprüche

1. Verfahren zur Beleuchtung in einer Machine Vision Anwendung, wobei eine Lichtquelle (10), vorzugsweise zumindest eine Leuchtdiode, eines Leuchtmittels (1) Licht emittiert und wobei eine Intensität (Int) des emittierten Lichts über einen von einer Steuereinheit (4) an die Lichtquelle (10) abgegebenen elektrischen Strom (i) und/oder elektrischer Spannung geregelt wird, wobei unabhängig von der Steuereinheit (4) zumindest eine mit der Intensität korrelierende Leistungsgröße (G_ist) der Lichtquelle (10) erfasst und mit zumindest einem Grenzwert (G) verglichen wird, und wobei, sobald die zumindest eine Leistungsgröße (G_ist) den zumindest einen Grenzwert (G) erreicht oder überschreitet, eine Aktion ausgelöst wird, mit welcher unabhängig von der Steuereinheit (4) die Intensität (Int) reduziert wird, **dadurch gekennzeichnet, dass** als die zumindest eine Leistungsgröße (G_ist) die Intensität (Int) selbst und/oder der elektrische Strom (i) und/oder die elektrische Spannung (u) verwendet wird.

2. Verfahren nach Anspruch 1, **dadurch gekennzeichnet, dass** das Leuchtmittel (1) im bestimmungsgemäßen Betrieb die Anforderungen einer Risikogruppe (RG) nach EN 62471:2009-03 erfüllt, **und dass** der Grenzwert (G) eine Anforderung einer Risikogruppe (RG), vorzugsweise der im ordnungsgemäßen Betrieb vorgesehenen Risikogruppe (RG), dient.

3. Verfahren nach einem der Ansprüche 1 oder 2, **dadurch gekennzeichnet, dass** als Aktion von der Diagnoseeinheit (2) der Strom (i) und/oder die elektrische Spannung zur Lichtquelle (10) reduziert wird.

4. Verfahren nach einem der Ansprüche 1 bis 3, **dadurch gekennzeichnet, dass** als Aktion von der Diagnoseeinheit (2) der Strom (i) und/oder die elektrische Spannung unterbrochen wird.

5. Verfahren nach einem der Ansprüche 1 bis 4, **dadurch gekennzeichnet, dass** als Aktion von der Diagnoseeinheit (2) ein Versorgungsstrom (iq) der Steuereinheit (4) und/oder der Lichtquelle (10) unterbrochen wird.

6. Leuchtmittel (1) zur Beleuchtung in einer Machine Vision Anwendung mit zumindest einer Lichtquelle (10), vorzugsweise zumindest einer Leuchtdiode, die dazu ausgebildet ist, Licht zu emittieren, und einer Steuereinheit (4), welche dazu ausgebildet ist, die Lichtquelle (10) mit einem elektrischen Strom (i) und/oder einer elektrischen Spannung zu versorgen und eine Intensität (Int) des emittierten Lichts über den elektrischen Strom (i) und/oder die elektrische Spannung zu regeln, wobei eine Detektionseinheit (20) vorgesehen ist, welche dazu ausgebildet ist, zumindest eine mit der Intensität (Int) korrelierende Leistungsgröße (G_ist) der Lichtquelle (10) zu erfassen, und wobei eine Diagnoseeinheit (2) vorgesehen ist, welche dazu ausgebildet ist, die zumindest eine Leistungsgröße (G_ist) mit zumindest einem vorgegebenen Grenzwert (G) zu vergleichen und eine Aktion auszulösen, die unabhängig von der Steuereinheit (4) die Intensität (Int) reduziert, sobald die zumindest eine Leistungsgröße (G_ist) den zumindest einen Grenzwert (G) erreicht, oder überschreitet, **dadurch gekennzeichnet, dass** als zumindest eine Leistungsgröße (G_ist) die Intensität (Int) selbst und/oder der elektrische Strom (i) und/oder die elektrische Spannung (u) dient.

7. Leuchtmittel (1) nach Anspruch 6, **gekennzeichnet durch** eine Parametereinheit (21), die dazu ausgebildet ist, der Diagnoseeinheit (2) eine Vergleichsgröße (G) zur Verfügung zu stellen.

8. Machine Vision System mit einer Arbeitsstation (9), einer Kamera (8) und zumindest einem Leuchtmittel (1) nach Anspruch 6 oder 7, wobei die Kamera dazu ausgebildet ist, einen Leuchtbereich (5) der Arbeitsstation (9) zu erfassen und das Leuchtmittel (1) dazu ausgebildet ist, den Leuchtbereich (5) auszuleuchten.

## Claims

1. Illumination method in a machine vision application, wherein a light source (10), preferably at least one light-emitting diode, of an illumination means (1) emits light and wherein the intensity (Int) of the emitted light is regulated by an electric current (i) and/or electric voltage emitted to the light source (10) by a control unit (4), wherein independently of the control unit (4), at least one performance variable (G_ist) of the light source (10), the performance variable (G_ist) correlating to the intensity (Int), is captured and compared to at least one limit value (G), and wherein as soon as the at least one performance variable (G_ist) reaches or exceeds the at least one limit value (G), an action is triggered with which the intensity (Int) is reduced independently of the control unit (4), **characterized in that** the intensity (Int) itself and/or the electric current (i) and/or the electric voltage (u) is used as the at least one performance variable (G_ist).

2. Method according to claim 1, **characterized in that** the illumination means (1) in the intended operating mode meets the requirements of a risk group (RG) pursuant to EN 62471:2009-03, **and that** the limit value (G) is used as a requirement of a risk group (RG), preferably of the risk group (RG) provided for in the intended operating mode.

3. Method according to claim 1 or 2, **characterized in that** as action, the diagnostic unit (2) reduces the current (i) and/or the electric voltage to the light source (10).

4. Method according to one of the claims 1 to 3, **characterized in that** as action, the diagnostic unit (2) interrupts the current (i) and/or the electric voltage.

5. Method according to one of the claims 1 to 4, **characterized in that** as action, the diagnostic unit (2) interrupts a supply current (iq) of the control unit (4) and/or the light source (10).

6. Illumination means (1) for illumination in a machine vision application having at least one light source (10), preferably at least one light-emitting diode that is configured to emit light, and a control unit (4), which is configured to supply the light source (10) with an electric current (i) and/or an electric voltage, and to regulate a intensity (Int) of the emitted light via the electric current (i) and/or the electric voltage, wherein a detection unit (2) is provided, which is configured to capture at least one performance variable (G_ist) of the light source (10), the performance variable (G_ist) correlating to the intensity (Int), and wherein a diagnostic unit (2) is provided which is configured to compare the at least one performance variable (G_ist) against at least one specified limit value (G) and to trigger an action, which reduces the intensity (Int) independently of the control unit (4), as soon as the at least one performance variable (G_ist) reaches or exceeds the at least one limit value (G), **characterized in that** the intensity (Int) itself and/or the electric current (i) and/or the electric voltage (u) is used as the at least one performance variable (G_ist).

7. Illumination means (1) according to claim 6, **characterized in that** a parameter unit (21) is provided, which is configured to provide a comparison variable (G) to the diagnostic unit (2).

8. Machine vision system having a work station (9), a camera (8) and at least one illumination means (1) according to claim 6 or 7, wherein the camera (8) is configured to capture a illuminated area (5) of the work station (9) and the illumination means (1) is configured to illuminate the illuminated area (5).

## Revendications

1. Procédé pour l'éclairage dans une application de vision industrielle, une source de lumière (10), de préférence au moins une diode électroluminescente, d'un moyen d'éclairage (1) émettant de la lumière et une intensité (Int) de la lumière émise étant réglée par le biais d'un courant électrique (i) et/ou d'une tension électrique fournis par une unité de commande (4) à la source de lumière (10), indépendamment de l'unité de commande (4) au moins une grandeur de puissance (G_ist) de la source de lumière (10) corrélée avec l'intensité étant détectée et comparée avec au moins une valeur limite (G), et, dès que l'au moins une grandeur de puissance (G_ist) atteint ou dépasse l'au moins une valeur limite (G), une action étant déclenchée, par laquelle l'intensité (Int) est réduite indépendamment de l'unité de commande (4), **caractérisé en ce que** l'intensité (Int) même et/ou le courant électrique (i) et/ou la tension électrique (u) sont utilisés en tant que l'au moins une grandeur de puissance (G_ist).

2. Procédé selon la revendication 1, **caractérisé en ce que** le moyen d'éclairage (1) remplit, pendant le fonctionnement conforme, les exigences d'une classe de risque (RG) selon la norme EN 62471:2009-03, **et en ce que** la valeur limite (G) sert comme une exigence d'une classe de risque (RG), de préférence de la classe de risque (RG) prévue lors du fonctionnement conforme.

3. Procédé selon l'une des revendications 1 ou 2, **caractérisé en ce que,** en tant qu'action de l'unité de diagnostic (2), le courant (i) et/ou la tension électrique vers la source de lumière (10) sont réduits.

4. Procédé selon l'une des revendications 1 à 3, **caractérisé en ce que,** en tant qu'action de l'unité de diagnostic (2), le courant (i) et/ou la tension électrique sont interrompus.

5. Procédé selon l'une des revendications 1 à 4, **caractérisé en ce que,** en tant qu'action de l'unité de diagnostic (2), un courant d'alimentation (iq) de l'unité de commande (4) et/ou de la source de lumière (10) est interrompu.

6. Moyen d'éclairage (1) pour l'éclairage dans une application de vision industrielle comportant au moins une source de lumière (10), de préférence au moins une diode électroluminescente, qui est conçue pour émettre de la lumière, et une unité de commande (4), laquelle est conçue pour fournir un courant électrique (i) et/ou une tension électrique à la source de lumière (10)
et pour régler une intensité (Int) de la lumière émise par le biais du courant électrique (i) et/ou de la tension électrique, une unité de détection (20) étant prévue, laquelle est conçue pour détecter au moins une grandeur de puissance (G_ist) de la source de lumière (10) corrélée avec l'intensité (Int) et une unité de diagnostic (2) étant prévue, laquelle est conçue pour comparer l'au moins une grandeur de puissance (G_ist) à au moins une valeur limite (G) prédéfinie et déclencher une action qui réduit l'intensité (Int), indépendamment de l'unité de commande (4), dès que l'au moins une grandeur de puissance (G_ist) atteint ou dépasse l'au moins une valeur limite (G), **caractérisé en ce que** l'intensité (Int) même et/ou le courant électrique (i) et/ou la tension électrique (u) servent en tant que l'au moins une grandeur de puissance (G_ist).

7. Moyen d'éclairage (1) selon la revendication 6, **caractérisé par** une unité de paramètres (21), qui est conçue pour mettre une grandeur de comparaison (G) à la disposition de l'unité de diagnostic (2).

8. Système de vision industrielle comportant une station de travail (9), une caméra (8) et au moins un moyen d'éclairage (1) selon la revendication 6 ou 7, la caméra étant conçue pour détecter une zone d'éclairage (5) de la station de travail (9) et le moyen d'éclairage (1) est conçu pour éclairer la zone d'éclairage (5).
